# EUROPEAN PATENT SPECIFICATION

(11) **EP 2 337 278 B1**
(45) Date of publication and mention of the grant of the patent: **29.10.2014**
(21) Application number: 09306266.9
(22) Date of filing: 18.12.2009
(51) Int. Cl.: H04L 12/755, H04L 12/781

(54) **Method of exchanging routing information between network nodes in a packet switched network**
Verfahren zum Austausch von Leitungsinformationen zwischen Netzwerkknoten in einem paketvermittelten Netzwerk
Procédé d'échange d'information d'acheminement entre n'uds de réseau dans un réseau commuté par paquets

(43) Date of publication of application: 22.06.2011
(73) Proprietor: ALCATEL LUCENT, 92100 Boulogne-Billancourt (FR)
(72) Inventor: Puricelli, Paolo Maria, 20040, Caponago (IT); Ciammarughi, Laura, 20040, Caponago (IT)
(74) Representative: Wetzel, Emmanuelle

(56) References cited:
- US-A1- 2007 058 607
- US-B1- 6 587 475
- US-B1- 7 239 613
- R. CALLON, DIGITAL EQUIPMENT CORPORATION: "Use of OSI IS-IS for Routing in TCP/IP and Dual Environments, RFC 1195" IETF STANDARD, INTERNET ENGINEERING TASK FORCE, IETF, CH, 1 December 1990 (1990-12-01), XP015006139 ISSN: 0000-0003

## Description

### Field of the invention

The invention relates to a method of exchanging routing information in a packet switched network.

### Background

In packet switched networks, data packets are exchanged between network nodes according to network protocols, also called Layer 3 protocols, Examples for such protocols are the Internet Protocol (IP protocol) as specified in the paper "RFC 791; Internet Protocol, Darpa Internet Program, Protocol Specification; Information Sciences Institute, University of Southern California, 4676 Admiralty Way, Marina del Rey, California 90291; September 1981 briefly called RFC791, or the Connectionless Network Protocol (CLNP) as specified in the paper "Information technology - Protocol for providing the connectionless-mode network service: Protocol specification ISO/IEC 8473-1; 1998", briefly called ISO 8473. A data packet, which is received by a network node, is forwarded by the network node to a further network node depending on the destination network address of the data packet and depending on a routing table stored within the network node. Such a destination network address is a Layer 3 address of a Layer 3 protocol. By considering the routing table and the destination address of the data packet, the network node is able to determine that adjacent network node to which the network node shall forward the data pocket.

In a packet switched network, it is possible that the network contains network nodes which support only one specific network protocol, for instance the IP protocol while other network nodes supports only another specific network protocol, for instance the CLNP protocol. Even further, other network nodes may support multiple network protocols, for instance the IP protocol and the CLNP protocol.

In order to have data at hand for building a routing table at a network node, the network nodes exchange link state messages according to the routing protocol called Intermediate System to Intermediate System protocol (IS-IS protocol). The IS-IS routing protocol is defined in the standard ISO/IEC, FDIS 10589: 2001 (E), Information technology -Telecommunications and information exchange between systems - Intermediate System to Intermediate System infra-domain routing information exchange protocol for use in conjunction with the protocol for providing the connectionless-mode network service (ISO 8473)", briefly called ISO/IEC 10589.

The IS-IS routing protocol as defined in ISO/IEC 10589 has been designed for use in conjunction with the CLNP protocol as defined in ISO 8473.

The IS-IS routing protocol has been extended for use in conjunction with the IP protocol in the paper "Network Working Group - Request for Comments: 1995, Ross W. Callon, Digital Equipment Corporation, December 1990, Use of OSI IS-IS for Routing in TCP/lP and Dual Environments", briefly called RFC 1195. According to RFC 1195, the IS-IS routing protocol can be used in networks having nodes which support only the network protocol of IP, only the network protocol of CLNP or both of these network protocols. The IS-IS routing protocol of RFC 1195 may even be extended to be used in conjunction with the network protocol called Internet Protocol Version 6 (lPv6).

One type of link state message of the IS-IS routing protocol is called link state package protocol data unit (LSP PDU). This is a message, in which a node communicates to other nodes its node address and a list of those network nodes which are adjacent to the network node. A network node sends its link state message LSP PDU as a multicast message to all the other network nodes of the network. The date of received link state messages is stored by the receiving network node in a link state database. The nodes run an algorithm called Shortest Path First (SPF) on the database for building the routing table. Thus, when receiving LSP PDU messages from all other network nodes, a network node has the necessary information at hand for determining a routing table for forwarding data packet.

According to the IS-IS routing protocol, one routing table is built independently of the different network protocol supported by the network nodes. The assumption is, that all network nodes support the same set of network protocol. In order to route packets formatted according to a specific network protocols, it is necessary that all the network nodes operate support that specific same network protocol, since the SPF algorithm building the routing table does not take into consideration individual sets of network protocols supported by the individual network nodes. Thus, a data packet of one specific network protocol may be forwarded to a network node which does not support that specific network protocol. Therefore, the data packet may get lost.

To overcome these limitations, a solution has been proposed in a previously filed but yet unpublished patent application of the applicant under the European Patent Application Number 08305656.4. In this application, it is proposed that a link state message LSP PDU sent by a network node contains a data field indicating the type of network protocols which are supported by that network node. It is furthermore proposed, that network nodes receiving the LSP PDU use a modified SPF algorithm for compiling different routing tables for different network protocols. For each different network protocol supported by the network node, a different routing table is determined, wherein for the respective routing table only network nodes supporting the respective network protocol are taken into consideration. When a data packet of the respective network protocol is received by the network node, the network node uses that routing table which matches the respective network protocol. Thus, it is ensured that data packets are not forwarded towards network nodes, which do not support the respective network protocol. It shall be assumed, that whenever the term 'SPF algorithm' is used further on in this specification, it is referred to this SPF algorithm proposed in the European Potent Application Number 08305656.4.

A topology of a network may be such, that one node supporting multiple network protocols is adjacent via a link to another node, which also supports those multiple network protocols. According to the known solution described above, a link between these two nodes is always considered by an SPF algorithm for forwarding data packets of any of the multiple network protocols. This is due to the fact that the data field of an LSP PDU indicating the type of supported network protocols is per node and not per link.

Therefore, an SPF algorithm, which compiles a routing table for any of the multiple network protocols, always considers a link, which connects two network nodes supporting multiple network protocols, for forwarding data pockets of any of the multiple network protocols. It may be the case, that a network manager wishes to have such a link considered only for forwarding data packets of certain network protocols. Relying on the methods described above, this is not possible.

The document US 7,239,613 B1 discloses a method of purging routing data packets in a network. A router is elected as a Designated Router of a sub-network. The Designated Router produces a pseudo-node that represents all other routers of that sub-network, by issuing Link State Messages advertising the pseudo-node as a node adjacent to the other routers. The other routers advertise themselves via Link State Messages, in which an adjacency only with the pseudo-node is advertised.

### Summary

According to the invention, a method of exchanging routing information between network nodes in a packet-switched network is proposed.

The network nodes of the network advertise themselves to other network nodes by sending to the other network nodes link state messages which contain
- a network node address of the respective network node,
- on adjacency list that indicates network nodes which are adjacent to the respective network node, and
- a list of network protocols which are supported by the respective network node.

A network node contains a first and a second interface. Via the first interface a first other network node is reachable, and via the second interface a second other network node is reachable. The network node supports a set of at least two network protocols. This network nodes is furthermore configured, such that it supports via the first interface only a subset of the set of network protocols. It shall be ensured, that other network nodes consider that link, to which the interface of the network node is connected, only for forwarding data packets of the subset of network protocols. This is achieved, in that the network node advertises to the other network nodes a pseudo network node, which supports only network protocols from the subset of network protocols. The pseudo network node is virtually placed in the network topology of the network between the network node advertising the pseudo network node and the first other network node, which is directly reachable via the interface of the network node.

The pseudo network node is advertised in that the network node sends to the other network nodes link state messages, which contain
- a pseudo network node address as the network node address of the pseudo network node,
- an adjacency list that indicates the network node and the first other network node, which is directly reachable via the interface of the network node, and
- and a network protocol list, which indicates only network protocols from the subset of network protocols.

The network node advertises itself to the other network nodes, by sending to the other network nodes at least one link state message containing an adjacency list, which contains
- the second other network node reachable via the second interface, and
- the pseudo network node instead of the first other network node reachable via the first interface (IF1).

The pseudo network node is advertised as a network node supporting only network protocols from the subset of network protocols. The result is, that other network nodes receiving these link state messages will consider the link, which is connected to the interface of the network node, only for forwarding data pockets of those network protocols, which are supported by that interface, since now the pseudo network node is placed along that link.

Thus, it is possible to achieve a solution, in which only data packets of a subset of network protocols are forwarded via an interface of a network node, wherein the network node itself may actually support a larger set of network protocols.

Furthermore, this solution is a solution, which is backward compatible to the solution proposed in the yet unpublished European Patent Application 08305656.4, meaning that no additional data field is needed within a link state message for advertising the pseudo network node, and also meaning that no further modification of the SPF algorithms running in the other network nodes is necessary.

### Brief description of the drawings

Fig. 1 shows two network nodes connected via one link.
Fig. 2 shows the two network nodes and a pseudo node.
Fig. 3 shows the two network nodes connected via two links.
Fig. 4. shows the two network nodes and two pseudo nodes.
Fig. 5 shows a network node containing different hardware elements.
Fig. 6 shows different protocols of different protocol layers supported by a network node according to a first embodiment.
Fig. 7 shows different protocols of different protocol layers supported by a network node according to a second embodiment.

### Description of embodiments

Network nodes of a network exchange messages called protocol data units (PDU) of the IS-IS protocol, The nodes exchange handshake messages called Hello-PDUs between themselves and their adjacent neighboring nodes. By exchanging such handshake messages, a network node is able to discover its adjacent neighboring nodes. Starting from one node supporting a network protocol, the adjacent node is that node, which can be reached via a link and which is the closest node on that link supporting also a network protocol. Thus, a link is a connection connecting two adjacent nodes supporting network protocols, without having between the two adjacent nodes another node, which supports a network protocol.

Having discovered its adjacent nodes via the handshake messages, the node generates an adjacency list containing its neighboring nodes. Each node advertises itself to other network nodes via LSP PDUs, which are multicast messages. An LSP PDU of a network node contains the node address of the respective node, an adjacency list indicating the neighboring network nodes of the respective node, and a list indicating those network protocols which are supported by the respective node. A network node receiving the LSP PDU messages from other network nodes stores the information of These messages in a link state database. In order to synchronize their link state databases, the network nodes exchange sequence number packets (SNP-PDU). If all link state databases of all network nodes are synchronized and all network nodes run the same SPF algorithm for determining routing tables, then the routing tables of all network nodes are congruent.

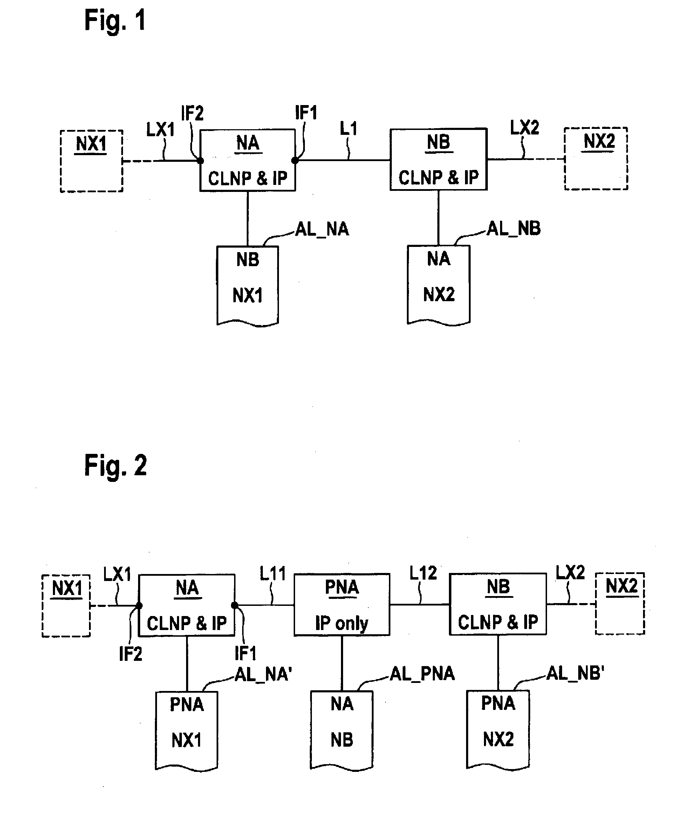

Figure 1 shows a node NA, which is connected via an interface IF1 along a link L1 to another node NB. Via an interface IF2 the node NA is connected along a link LX1 to a node NX1 of the network. The node N8 is connected via a link LX2 to a node NX2. The nodes NA, NB both support multiple network protocols, which are Layer 3 protocols, for exchanging data packets in a packet switched network. According to this example, the nodes NA, NB support the IP protocol and the CLNP protocol. The network nodes NA, NB may support further network protocols.

The node NA detects via exchanging handshake messages its adjacent neighbors, NX1, NB, which it then enters into its adjacency list AL_NA, as shown in Figure 1. The link state message sent by the node NA to the other network nodes then contains the node address of the node NA, the adjacency list AL_NA and a list containing the network protocols which the node NA supports, in this example the CLNP protocol and the IP protocol.

In the same way, the node NB detects via exchanging handshake messages its adjacent neighbors, NA, NX2, which it then enters into its adjacency list AL_NB. The node NB sends to other network nodes a link state message which contains the node address of the node NB, its adjacency list AL_NB and a list of the network protocols which it supports, in this example the CLNP protocol and the IP protocol.

Other network nodes receiving the link state messages from the nodes NA and NB will thus assume, that it is possible to route data packets of the IP and the CLNP protocol between the nodes NA, NB via the link L1.

It may be the case, that a network manager may wish that the link L1 shall be used only for forwarding data packets of a subset of network protocol namely in this example only for forwarding data packets of the IP protocol. Therefore, the network manager may wish to configure then interface IF1 of the node NA, such that via the interface IF1 only the IP protocol is supported. It may alternatively be the case, that the interface IF1 is only capable of supporting only the IP protocol, in terms of technical capability, but not the CLNP protocol.

It shall be ensured, that via the link L1 starting from the interface IF1, only data packets of the subset of network protocols, which are supported at the interface IF1, are forwarded. Therefore, it has to be ensured, that the link L1 will be considered by SPF algorithm of other network nodes only for building routing tables of IP protocol.

In order to achieve this, the proposed solution shown in Fig. 2 is carried out by the network node NA. Fig. 2 shows all network nodes as Fig. 1, as well as furthermore a pseudo network node PNA, which is virtually placed between the node NA and the node NB. The link L1 is replaced by the link L11 connecting the pseudo node PNA and the interface IF1 of the node NA, and another link L12 connecting the pseudo node PNA and the node NB. This replacement of the links will be described in detail later on. Furthermore, Figure 2 shows a modified adjacency list AL_NA' of the node NA, a modified adjacency list AL_NB' of the node NB and on adjacency list AL_PNA of the pseudo node PNA.

The pseudo node PNA supports only network protocols of the subset of network protocols, which are supported via the interface IF1 of the node NA, namely only the IP protocol. The creation of the pseudo node PNA is achieved, in that the node NA advertises the pseudo node PNA to the other network nodes of the network. This advertisement is carried out, in that the node NA sends to the other network nodes link state messages which contain the following:
■ a pseudo network node address as the network node address of the pseudo node,
■ an adjacency list AL_PNA which indicates as the adjacent neighbors of the pseudo node PNA the nodes NA and NB, and
■ a list of those network protocols, which are supported by the pseudo node, in this example a list containing only the IP protocol.

By placing into the adjacency list AL_PNA of the pseudo node PNA the advertising node NA itself and that node NB, which is directly reachable via the interface IF1 of the node NA, it is achieved that the pseudo node PNA is virtually placed between the nodes NA itself and the node NB.

According to the resulting topology of the network as shown in Fig. 2, a new adjacent neighboring node of the node NA is now the pseudo node PNA instead of the node NB. Therefore, the node NA replaces in its adjacency list AL_NA' the node NB, which is directly reachable via a link via the interface IF1, by the pseudo node PNA. Therefore, a link state message advertising the node NA now contains the adjacency list AL_NA'. Furthermore, the node NA sends sequence number packet messages for synchronizing its own link state database with the link state database of the other nodes, such as the nodes PNA, NB, NX1, NX2.

Therefor, a node which
■ receives a link state message advertising the pseudo node PNA,
■ and which determines a routing table for such the CLNP protocols, which is a network protocol that is not contained in the list of network protocols supported by the pseudo node PNA,
will not consider the pseudo node PNA for forwarding data packets of the CLNP network protocol. Thus, the routing tables of other network nodes for that network protocol, for example the CLNP protocol, will not rely on the link L11, which is connected to the interface IF1 of the node NA, for forwarding data packets of the CLNP protocols.

Due to the creation of the pseudo node PNA, the adjacent neighboring node for then node NB has changed from NA to the pseudo node PNA. Thus, the node NB discovers the pseudo node PNA as its adjacent neighbor, by exchanging handshake message with the node NA as described in the previously filled, but yet unpublished European patent application of the applicant with the Application Number 09306252.9. Due to the discovery of the pseudo node PNA as the adjacent node, the node NB replaces in its adjacency list AL-NB' the node NA, which was directly reachable via the link L1 before the creation of the pseudo node PNA, by the pseudo node PNA.

Formerly known handshake messages support only the discovery of adjacent network nodes via the first six bytes of their network node addresses. The handshake messages proposed in the patent application number 09306252.9 support the discovery of adjacent network nodes having a node address of six bytes plus a seventh byte, which is the pseudo node identifier of a pseudo node. The proposed handshake messages contain a node address of that node, which sent the handshake message, and a data field, which contains a pseudo node identifier of a pseudo node that is associated with the node that sent the message. Furthermore, the proposed handshake messages contain a node address of a network node, which is discovered by the sending node as an adjacent node. Even furthermore, the proposed handshake messages contain a data field, which contains a pseudo node identifier of a pseudo node that is associated with the adjacent node.

Alternatively, the node NB replaces in its adjacency list AL_NB' the node NA by the node PNA due to a configuration performed at the node NB. This configuration is carried out by the network manager.

Furthermore, the node NB sends sequence number packet messages to other network node PNA, NA, NX1, NX2 for synchronizing its own link state database with the link state database of the other nodes.

The replacement of the link L1 by the link L11 which connects the pseudo node PNA and the interface IF1 of the node NA, and another link L12, which connects the pseudo node PNA and the node NX, is achieved in that the nodes NA, NB induce respective information in their link state messages. According to the standard ISO/IEC 10589, a link state message which advertises a node contains an adjacency list. Furthermore, the link state message contains for each adjacent node of the adjacency list a data field declaring a link, which connects the node that is advertised and the respective adjacent node.

Thus, the nodes NA advertises the pseudo node PNA via a link state message, which contains a data filed declaring the link L11 and a data field declaring the link L12. Furthermore, the node NA advertises itself via a link stale message, in which the link L1, which previously lead from the interface IF1 of the node NA to the node NB, is replaced by the link L11, which now leads from the interface IF1 of the node NA to the pseudo node PNA. Furthermore, the node NB advertises itself via a link state message, in which the link L1, which previously connected the node NB with the node NA, is replaced by the link L12, which now connects the node NB and the pseudo node PNA.

The described solution is achieved without any further modification of the SPF algorithms, which determine the routing tables of the network nodes. The SPF algorithms will simply recognize the pseudo node PNA as a further node, which is placed between the nodes NA and NB and which supports only the IP protocol.

Thus, the invention provides a method, by which one single node of a network may ensure, that a link connected to one of its interfaces its considered by other network nodes only for forwarding data packets of network protocols, which are supported at that interface.

The node NA chooses the node address of the pseudo node PNA as described now in detail. According to the standard ISO/IEC 10589, a link state message LSP PDU contains the node address of the network node, which is advertised by this link state message, in the form of a link state package identifier (LSP ID). The LSP ID consists of the so called Source Identifier (Source ID), having a length called ID Length, which is a length of 6 bytes. The LSP ID consists furthermore of two further bytes, which are the byte called Pseudo Node Identifier (Pseudonode ID) and the byte called Link State Packet Number (LSP Number).

For the node NA, which is a real node placed in the network, the Source ID is the node address of the node NA. The following byte, which is the Pseudonode ID, is set to 0, which is mandatory for real network nodes. For pseudo nodes, the Pseudonode ID is set to a value different to zero. The byte LSP Number is not of importance for identifying a node via its node address, since an SPF algorithm operates only on the Source ID together with the Pseudonode ID as the node address. The LSP number is not token into consideration by the SPF algorithm,

The node NA sets the pseudo node address of the pseudo node PNA, by setting the Source ID of the pseudo node PNA to the same value as the Source ID of the node NA itself. Furthermore, the node NA sets the pseudo node address of the Pseudonode ID to a value different to 0. An SPF algorithm of a node receiving a link state message containing the pseudo node address as node address, will then identify the pseudo node PNA as just another node within the network. Since the Pseudonode ID has a length of one byte, it is possible to choose up to 255 different values for identifying 255 different pseudo nodes, which can be created by the network node NA. For creating a pseudo node that support only the IP protocol, the Pseudonode ID byte is set to the value 0xCC. The Pseudonode ID byte of a pseudo node supporting only CLNP protocol is set to 0x81.

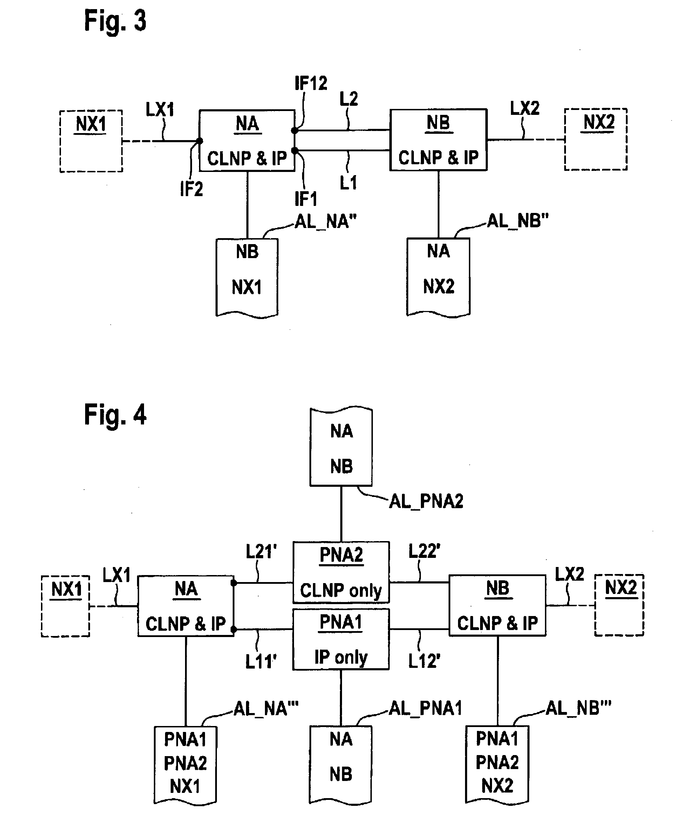

Figure 3 shows a further network topology. Fig. 3 shows the same network nodes as Fig. 1. Furthermore, Fig. 3 shows a link L2, which connects an interface IF12 of the node NA with the node NB. The node NA sends link state messages which contain an adjacency list AL_NA", which contains the nodes NB and NX1. The node NB sends link state messages which contain an adjacency list AL_NB", which contains the nodes NA and NX2

The network manager may wish to configure the node NA, such the via the interface IF1 only the network protocol IP is supported, while via the interface IF12 only the network protocol CLNP is supported. Thus, the link L2 shall be considered by other nodes only for forwarding data packets of the CLNP protocol, while the link L1 shall be considered only for forwarding data packets of the IP protocol.

It is known, that a link may be given a certain metric concerning a certain network protocol. The link L1 may be given a metric with regard to the IP protocols, wherein this metric is smaller that the metric of the link L2 with regard to the IP protocol, for declaring the link L1 as the preferred link for the IP protocol. Furthermore, the link L1 may be given a metric with regard to the CLNP protocol wherein this metric is smaller than the metric of the link L1 with regard to the CLNP protocol, for declaring the link L2 as the preferred link for the CLNP protocol.

But by this declaration of metrics as described above, it is not possible to ensure that the link L1 will be considered only for forwarding data packets of the IP protocol. It is furthermore also not possible to ensure that the link L2 will be considered only for forwarding data packets of the CLNP protocol.

Making use of the above described method for creating pseudo nodes, it now becomes possible to define, which type of data packets should be forwarded via which of the links L1, L2 leaving the same node NA. Thus, it is possible to ensure, that other nodes do not consider the link L1 for forwarding data packets a network protocols that is not supported at the interface IF1 . This solution, will be explained in more detail according to Figure 4.

According to Figure 4, all elements as shown in Figure 3 are shown. Furthermore, Figure 4 shows a pseudo node PNA1, which is virtually placed between the node NA and the node NB. The link L1 is replaced by a virtual link L1, which connects the pseudo node PNA1 and the interface IF1 of the node NA, and another virtual link L12', which connects the pseudo node PNA1 and the node NB. Furthermore, Figure 4 shows a pseudo node PNA2, which is virtually placed between the node NA and the node NB. The link 1.2 is replaced by a virtual link L21', which connects the pseudo node PNA2 and the interface IF12 of the node NA, and another virtual link L22', which connects the pseudo node PNA2 and the node NB.

The solution is achieved, in that the network node NA creates at its interface IF1, which supports only the IP protocol, α pseudo node PNA1, which supports only the IP protocol. Furthermore, the node NA creates at its interface IF12, which supports only the CLNP protocol, a pseudo node PNA2, which supports only the CLNP protocol. The node NA advertises to other network nodes the pseudo node PNA1 as an IP only node by advertising respective link state messages, as descri bed previously above. The node NA advertises to other network nodes the pseudo node PNA2 as CLNP only node by advertising respective link state messages, as described previously above.

Other nodes, which receive these link state messages and which run the SPF algorithm, will then consider the link L11' between the interface IFl of the node NA and the node NB only for forwarding data packets of the IP protocol. Thus, the links L11' and L21' will be considered only for forwarding data packets of the IP protocol. The result is, that the interface IF1 will be considered only for forwarding data packets of the IP protocol.

Furthermore, other nodes, which receive these link state messages and which run the modified SPF algorithm, will then consider the links L21' and L22' between the interface IF12 of the node NA and the node NB only for forwarding data packets of the CLNP protocol. The result is, that the interface IF2 will be considered only for forwarding data packets of the CLNP protocol.

According to the network configuration shown in Fig- 3, prior to the creation of the pseudo nodes PNA1, PNA2, the link state messages of the node NA contained an adjacency list AL_NA" in which the node NX1 and the node NB were contained. According to the solution shown in Fig. 4, the set of neighboring nodes for the node NA now has changed, since now there are three neighboring nodes for the node NA, which are the node NX1 and the pseudo nodes PNA1 and PNA2. Thus, the node NA now advertises itself by sending link state messages which contain an adjacency list AL_NA"', in which those nodes or pseudo nodes are placed, which the node NA can now reach via the links L11', L21', LX1 which are connected to its interfaces IF1, IF2, IF12. Therefore, the adjacency list AL_NA"' contains the node NX1 and the pseudo nodes PNA1, PNA2. The node NA then advertises itself by sending link state messages containing the adjacency list ALN_NA"' in which the number of its adjacent nodes is increased as indicated above.

One may summarize this as follows:
■ In case a node is connected via n interfaces along n links to one other node, and in the case that the node virtually creates at each of these n interfaces a respective pseudo node, then the number of adjacent neighbors of the adjacency list of she node is increased by n-l.
■ In case a node is connected via n interfaces along n links to one other node, and in the case that the node creates at m<n interfaces a respective pseudo node, then the number of adjacent neighbors in the adjacency list of the node is increased by m.

Furthermore, since the creation of the pseudo nodes PNA1, PNA2 affects the set of adjacent neighboring nodes for the node NB, the node NB now enters into its adjacency list Al_NB'" those nodes, which it can reach directly reach via the links LX2, L12', L22' connected to itself. These are the node NX2 and the pseudo nodes PNA1, PNA2.

The node NB discovers the pseudo nodes PNA1, PNA2 as its adjacent neighbors by exchanging handshake messages as described in the previously filed, but yet unpublished European potent application of the applicant with the application number 09306252.9. Alternatively, the node NB places its adjacent nodes into its adjacency due to a configuration performed at the node NB by the network manager. Therefore, the adjacency list Al_NB'" contains the node NX2 and the pseudo nodes PNA1, PNA2.

Furthermore, the node NB sends sequence number packet messages to other nodes for synchronizing its own link state database with the link state database of the other nodes, such as the nodes PNA1, PNA2, NA, NX1, NX2.

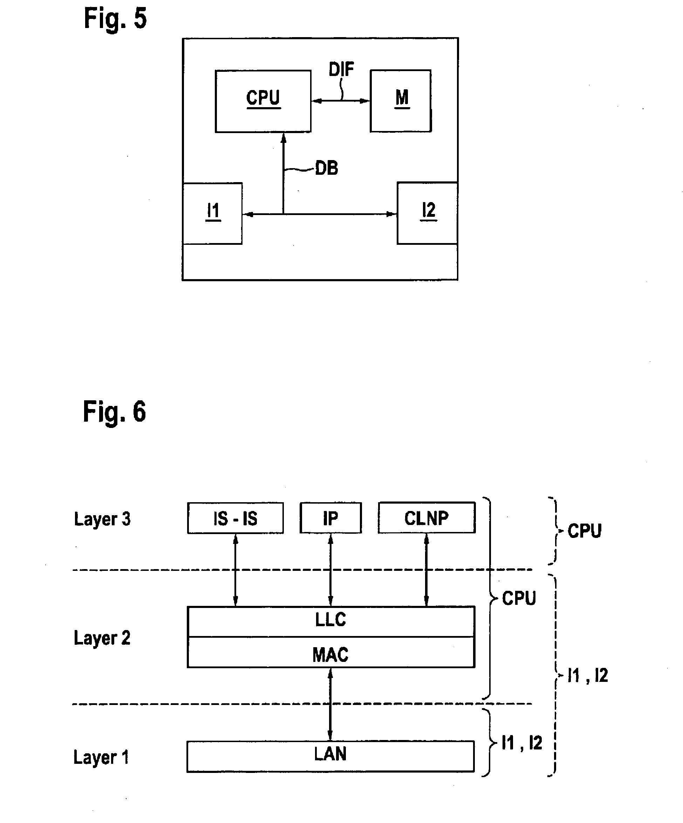

Fig. 5 shows a network node NN according to an embodiment. The network node NN contains a processor CPU and a memory M, The processor CPU and the memory M are connected via a data interface DIF. The network node NN contains an interface 11, via which only the network protocol IP is supported. Furthermore, the network node NN contains an interface 12, via which the IP and CLNP protocols are supported. The processor CPU and the interfaces I1, 12 ore connected via a data bus DB.

The number of processors contained in the network node NN is not limited to one processor there may be multiple processors working in parallel and performing different types of protocol within the network node. Furthermore, more than one memory may be contained in the network node. Further still, the number of interfaces via which the network node is connected to further network nodes is not limited to one but may be larger.

The network node NN is adapted to advertise itself to other network nodes by sending link state messages as previously described. Furthermore, the network node is adapted to advertise to other network nodes a pseudo network node, which supports only the IP protocol. The advertisement of the pseudo network node is given by the processor CPU of the network node NN being adapted to generate and send via the interfaces I1, 12 to other network nodes link state messages as previously describes above. Furthermore, the processor of the network node is adapted to exchange handshake messages as described above. The different functions which ore necessary for advertising the pseudo network node via the proper link state messages will now be described in detail.

Fig. 6 shows different protocols of different protocol layers carried out within the network node NN. At the Layer 3, also called Network Protocol Layer, the IS-IS protocol, the IP protocol and the CLNP protocol are carried out. These Layer 3 protocols interact with Layer 2 protocols, which are also called protocols of the Data Link Layer. The highest sublayer of the Data Link Layer is the Logical Link Control protocol according to the standard "IEEE Std 802.2-1998, Information processing systems - Local area networks - Part 2: logical link control, 31 Dec 1989, E-ISBN: 0-7381-4601-3" briefly called LLC. This protocol LLC directly interacts with the protocols of the network protocol layer. Directly below the protocol LLC, there is placed the sublayer of Media Access Control according to the standard "IEEE Std 802.3-2008, IEEE Standard for Information technology--Telecommunications and information exchange between systems--Local and metropolitan area networksSpecific requirements Part 3: Carrier Sense Multiple Access with Collision Detection (CSMA/CD) Access Method and Physical Layer Specifications - Section Five, 2008, ISBN. 973-07381-5797-9", briefly called MAC. This lower sublayer of the Data Link Layer interacts with the protocol of the Layer 1, which is also called the Physical Layer. At this Physical Layer, a protocol according to the Local Area Network LAN is running, which may be a protocol according to the well known protocol 10base-T. The protocols of the Layer 2, which are the LLC protocol and the MAC protocol together with the LAN protocol of the Layer 1 are well known as the technology called Ethernet.

Fig. 6 furthermore illustrates, indicated by the solid line brackets, which types of protocols are carried out at which hardware within the network node NN.

The processor CPU is adapted to run protocols of the Layer 3 and the Layer 2. Via the data bus DB, the processor CPU exchanges signals, such as Ethernet frames, with the interfaces 11, 12. The interfaces 11, 12 are adapted to run the protocols of the Physical Layer.

The network node NN supports via the interface 11 only a subset of network protocols, for example only the IP protocol. The network node NN is configured such that the CPU exchanges only data packets according to the IP protocol via the data bus DB with the interface 11 . Such a configuration can be set in the form of software running on the processor CPU.

The processor CPU generates a link state message for advertising the pseudo network node as previously described above. This link state message is then sent via the IS-IS protocol from the Layer 3 via the Layer 2 to the Layer 1, from where it is transmitted by the interfaces 11, 12 to the other network nodes of the network.

The different protocols depicted in Fig. 6 running on the processor CPU do not have to run as one single software, but may run on the processor CPU as different processing threads. Furthermore, the different protocols of the Layer 3 and the Layer 2 may run as different processing threads on different CPUs, which are connected via the data bus DB.

The memory M is used by the processor CPU for storing the link state database containing the information from the link state messages received from other network nodes. Furthermore, the processor CPU runs the algorithm SPF for determining for each network protocol supported by the network node NN α different routing table, which then is stored in the memory M. The memory M does not necessarily have to be one single memory but may be made up of different memory elements or memory storage devices to which the processor CPU is connected via a data-interface DIF.

According to this embodiment, indicated by the solid line brackets, the processor CPU is adapted to run protocols of the Layer 3 and the Layer 2. The interfaces IF1, IF2 ore adapted to run protocols of the Layer 1,

According to an alternative solution, also indicated in Figure 6 by the dashed line brackets, the processor CPU is adapted to run protocols of the Layer 3. The interfaces IF1, IF2 are adapted to run protocols of the Layer 2 and the Layer 1,

The implementation of protocols within the interfaces IF1, IF2 may be done as hardware or as software running on processors comprised within the hardware of the interfaces IF1, IF2.

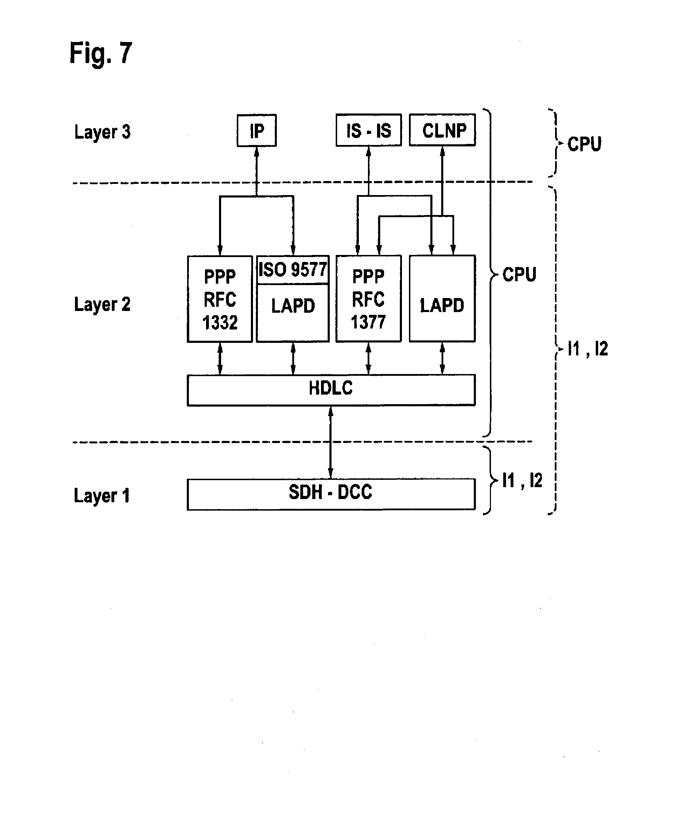

An alternative solution of carrying out alternative protocols at the network node NN is shown in Figure 7. In this embodiment, the structure of the network node NN is in general the same as depicted in Fig. 5. Figure 7 shows the different protocols which are carried out by different parts of the hardware of the network node NN.

At the Layer 3, the network protocols IP an CLNP are carried out as well as the routing protocol IS-IS.

At the Layer 2, different protocols arc carried out for different types of messages or data packets received from the Layer 3. Data packets originating from the CLNP protocol are passed on to either the Link Access Procedure for D-Channel LAPD as defined in the paper "ITU-T Recommendation Q.921 (09/97), Digital Subscriber Signaling System No. 1- Data Link Layer", brietly called Q.921, or to the Point-to-Point Protocol PPP as defined in the paper "Network Working Group, RFC 1377 - The PPP OSI Network Layer Control Protocol (OSINLCP), November 1992", briefly called RFC 1377. From either of these two protocols at the Layer 2, the resulting data is passed on to the next lower sublayer of the Layer 2, which carries out framing of the data according to the protocol of High-level Data Link Control HDLC.

At the Layer 1, data which is received from the Layer 2 is transmitted by means of a protocol supporting data transfer via the Data Communication Channel DCC of a network according to Synchronous Digital Hierarchy SDH, which is indicated as SDH-DCC.

Data packets originating from the IP protocol at Layer 3 are passed on to the Layer 2, namely to either the Point-to-Point Protocol PPP according to the standard "Network Working Group, RFC 1322 - A Unified Approach to Inter-Domain Routing , May 1992", briefly called RFC 1332, or to an LAPD protocol as defined by the standard "ISO/IEC 9577, Information Technology - Protocol Identification in the Network Layer, Fourth Edition, 1999-12-15", briefly called ISO 9577. From either of these Layer 2 protocols, the originating data is passed on to the protocol of HDLC, which handles the data from the Point-to-Point Protocol PPP or the LAPD protocol as previously described.

Routing messages originating at Layer 3 from the IS-IS protocol ore passed on to either the LAPD protocol or to a Point-to-Point protocol according to the standard RFC 1377. The data originating from these Layer 2 protocols is then passed on to the HDLC protocol, which handles the data as described above.

The HDLC protocol passes the data on to the next lower layer, which is the Layer 1, where the data is then transmitted via the Data Communication Channel DCC of the SDH network to other network nodes.

As indicated in Fig. 7, the processor CPU is adapted to run the protocols of the Layer 3 and the Layer 2. Furthermore, the interfaces 11, 12 are adapted to run the protocol of the Layer 1.

According to on alternative solution, also indicated in Figure 7 by the dashed line bracket, the processor CPU is adapted to carry out the protocols at the Layer 3, while the interfaces IF1 and IF2 are adapted to carry out the protocols at Layer 2 and Layer l.

The implementation of protocols within the interfaces IF1, IF2 may be done as hardware or as software running on processors comprised within the hardware of the interfaces IF1, IF2.

## Claims

1. Method of exchanging routing information between network nodes in a packet switched network,
wherein said network nodes (NA) advertise themselves to other network nodes (NX1, NB, NX2) by sending to said other network nodes link state messages containing
- a network node address of the respective network node (NA),
- an adjacency list (AL_NA) indicating network nodes adjacent to said respective network node (NX1, NB), and
- a network protocol list indicating network protocols supported by the respective network node (NA),
**characterized in that** a first of said network nodes (NA)
- comprises at least a first and a second interface (IF1, IF2), wherein a first other network node (NB) is reachable via said first interface (IF1) and wherein a second other network node (NX1) is reachable via said second interface,
- supports a set of at least two network protocols but is configured to support via said first (IF1) of its one or more interfaces (IF1, IF2) only a subset of said set of network protocols, advertises to said other network nodes (NB, NX1, NX2) a pseudo network node (PNA), which supports only network protocols from said subset,
wherein said first network node (NA) advertises said pseudo network node (PNA) by sending to said other network nodes (NB, NX1, NX2) at least one link state message containing
- a pseudo network node address as network node address,
- an adjacency list (AL_PNA) indicating said first network node (NA) and said first other network node (NB) which is reachable via said first interface (IF1), and
- a network protocol list indicating only network protocols from said subset, and wherein said first network node (NA) advertises itself to said other network nodes (NB, NX1, NX2), by sending to said other network nodes (NB, NX1, NX2) at least one link state message containing an adjacency list (AL_NA'), which contains
- said second other network node (NX1) reachable via said second interface (IF2), and
- said pseudo network node (PNA) instead of said first other network node (NB) reachable via said first interface (IF1).

2. Method according to claim 1,
wherein said network nodes generate from received link state messages different routing tables for different network protocol supported by the respective network node.

3. Method according to claim 1,
wherein said first network node (NA) advertises itself to said other network nodes (NB, NX1, NX2), by sending to said other network nodes (NB, NX1, NX2) at least one link state message in which a link (L11) connecting said first network node (NA) and said pseudo node (PNA) is declared.

4. Method according to claim 1,
wherein said first network node (NA) advertises said pseudo network node (PNA) to said other network nodes (NB, NX1, NX2), by sending to said other network nodes (NB, NX1, NX2) at least one link state message in which a link (L12) connecting said pseudo network node (PNA) and that network node (NB), which is reachable via said interface (IF1), is declared.

5. Method according to claim 1 to 4,
wherein said first network node (NA) sets said pseudo network node address by setting *k* first bytes of said pseudo network node address to k first bytes of said network node address of said first network node (NA), and by setting *j* last bytes of said pseudo network node address to a value different to zero.

6. Method according to claim 1 to 5,
wherein said first network node (NA) exchanges with that node (NB), which is reachable via said first interface (IF1), handshake messages, wherein said handshake messages contain a respective pseudo node identifier indicating a respective pseudo network node associated with the respective network node sending the handshake message.

7. Method according to claim 1,
wherein said first network node (NA) is configured to support
- via said first interface (IF1) only a first subset of said set of network protocols, and
- via a second interface (IF12) only a second subset of said set of network protocols,
and wherein said first network node (NA) advertises to said other network nodes (NB, NX1, NX2)
- a first pseudo node (PNA1), which supports only network protocols from said first subset, and
- a second pseudo node (PNA2), which supports only network protocols from said second subset.

8. Method according to claim 7,
wherein
- in the case said first network node (NA) is connected via n interfaces along *n* links to another network node (NB), and in the case that said first network node (NA) advertises *n* pseudo network nodes placed at said respective *n* interfaces, said first network node (NA) increases the number of its adjacent neighbors in its adjacency list by *n-1*.
- in the case said first network node (NA) is connected via *n* interfaces along *n* links to another network node (NB), and in the case that said first network node (NA) advertises *m*<*n* pseudo network nodes placed at said *m* respective interfaces, said first network node (NA) increases the number of its adjacent neighbors in its adjacency list by *m*.

9. Network node (NN) for exchanging data packets in a packet switched network, wherein said network node (NN) is adapted to support a set of at least two network protocols,
wherein said network node (NN) is adapted to advertise itself to other network nodes, by generating and sending to said other network nodes at least one link state message containing
- a network node address of said network node (NN),
- an adjacency list indicating network nodes adjacent to said network node (NN), and
- a network protocol list indicating network protocols supported by said network node (NN),
**characterized in that** said network node (NN)
- comprises at least a first and a second interface (IF1, IF2),
- is configured to support via said first (I1) of its one or more interfaces (I1, I2) only a subset of said set of network protocols,
and **in that** said network node (NN) is adapted to advertise to said other network nodes a pseudo network node, which supports only network protocols from said subset,
wherein said network node (NN) is adapted to advertise said pseudo network node by generating and sending to said other nodes at least one link state message containing
- a pseudo network node address as network node address,
- an adjacency list indicating said network node (NN) and a network node which is reachable via said first interface (I1), and
- a network protocol list indicating only network protocols from said subset, and wherein said network node (NN) is adapted to advertise itself to said other network nodes, by sending to said other network nodes at least one link state message containing an adjacency list (AL_NA'), which contains
- that network node (NX1) which is reachable via said second interface (IF2), and
- said pseudo network node (PNA) instead of said network node (NB) which is reachable via said first interface (IF1).

## Patentansprüche

1. Verfahren zum Austausch von Routing-Informationen zwischen Netzwerkknoten in einem paketvermittelten Netzwerk,
wobei sich die besagten Netzwerkknoten (NA) bei anderen Netzwerkknoten (NX1, NB, NX2) anzeigen, indem sie den besagten anderen Netzwerkknoten Verbindungszustandsnachrichten senden, welche enthalten:
- Eine Netzwerkknotenadresse des jeweiligen Netzwerkknotens (NA),
- eine Nachbarliste (AL_NA), welche die mit dem besagten jeweiligen Netzwerknoten (NX1, NB) benachbarten Netzwerkknoten angibt, und
- eine Netzwerkprotokoll-Liste, welche die von dem jeweiligen Knoten (NA) unterstützten Netzwerkprotokolle angibt,
**dadurch gekennzeichnet, dass** ein erster der besagten Netzwerkknoten (NA)
- mindestens eine erste und eine zweite Schnittstelle (IF1, IF2) umfasst, wobei ein erster anderer Knoten (NB) über die besagte erste Schnittstelle (IF1) erreichbar ist, und wobei ein zweiter anderer Knoten (NX1) über die besagte zweite Schnittstelle erreichbar ist,
- einen Satz von mindestens zwei Netzwerkprotokollen unterstützt, jedoch dafür konfiguriert ist, über die besagte erste (IF1) seiner ein oder mehreren Schnittstellen (IF1, IF2) lediglich einen Teilsatz des besagten Satzes von Netzwerkprotokollen zu unterstützen, und den besagten anderen Netzwerkknoten (NB, NX1, NX2) einen Pseudo-Netzwerkknoten (PNA) anzeigt, welcher ausschließlich Netzwerkprotokolle aus dem besagten Teilsatz unterstützt,
wobei der besagte erste Netzwerkknoten (NA) den besagten Pseudo-Netzwerkknoten (PNA) durch Senden mindestens einer Verbindungszustandsnachricht an die anderen Netzwerkknoten (NB, NX1, NX2) anzeigt, welche enthält:
- eine Pseudo-Netzwerkknotenadresse als die Netzwerkknotenadresse,
- eine Nachbarliste (AL_PNA), welche den besagten ersten Netzwerkknoten (NA) und den besagten ersten anderen Netzwerkknoten (NB), der über die besagte erste Schnittstelle (IF1) erreichbar ist, angibt, und
- eine Netzwerkprotokoll-Liste, welche lediglich Netzwerkprotokolle aus dem besagten Teilsatz angibt,
und wobei sich der besagte erste Netzwerkknoten (NA) bei den besagten anderen Netzwerkknoten (NB, NX1, NX2) anzeigt, indem er den besagten anderen Netzwerkknoten (NB, NX1, NX2) mindestens eine Verbindungszustandsnachricht mit einer Nachbarliste (AL_NA) sendet, welche enthält:
- den besagten zweiten anderen Netzwerkknoten (NX1), welcher über die besagte zweite Schnittstelle (IF2) erreichbar ist, und
- den besagten Pseudo-Netzwerkknoten (PNA) anstelle des besagten ersten anderen Netzwerkknotens (NB), welcher über die besagte erste Schnittstelle (IF1) erreichbar ist.

2. Verfahren nach Anspruch 1,
wobei die besagten Netzwerkknoten aus den empfangenen Verbindungszustandsnachrichten unterschiedliche Tabellen für unterschiedliche, von dem jeweiligen Netzwerkknoten unterstützte Netzwerkprotokolle erzeugen.

3. Verfahren nach Anspruch 1,
wobei sich der besagte erste Netzwerkknoten (NA) bei den besagten anderen Netzwerkknoten (NB, NX1, NX2) anzeigt, indem er den anderen Netzwerkknoten (NB, NX1, NX2) mindestens eine Verbindungszustandsnachricht sendet, in der ein Verbindungsabschnitt (L11), welcher den besagten ersten Netzwerkknoten (NA) und den besagten Pseudo-Knoten (PNA) verbindet, angegeben wird.

4. Verfahren nach Anspruch 1,
wobei der besagte erste Netzwerkknoten (NA) den besagten anderen Netzwerkknoten, (NB, NX1, NX2) den besagten Pseudo-Netzwerkknoten (PNA) anzeigt, indem er den besagten anderen Netzwerkknoten (NB, NX1, NX2) mindestens eine Verbindungszustandsnachricht sendet, in der ein Verbindungsabschnitt (L12), welcher den besagten Pseudo-Netzwerkknoten (PNA) und denjenigen Netzwerkknoten (NB), der über die besagte Schnittstelle (IF1) erreichbar ist, verbindet, angegeben wird.

5. Verfahren nach den Ansprüchen 1 bis 4,
wobei der besagte erste Netzwerkknoten (NA) die besagte Pseudo-Netzwerkknotenadresse einstellt, indem er *k* erste Bytes der besagten Pseudo-Netzwerkknotenadresse auf *k* erste Bytes der besagten Netzwerkknotenadresse des besagten ersten Netzwerkknotens (NA) einstellt und *j* letzte Bytes der besagten Pseudo-Netzwerkknotenadresse auf einen sich von Null unterscheidenden Wert einstellt.

6. Verfahren nach den Ansprüchen bis 5,
wobei der besagte erste Netzwerkknoten (NA) mit demjenigen Knoten (NB), der über die besagte erste Schnittstelle (IF1) erreichbar ist, Handshake-Nachrichten austauscht, wobei die besagten Handshake-Nachrichten eine jeweilige Pseudo-Knotenkennung enthalten, welche einen jeweiligen mit dem jeweiligen Netzwerkknoten, welcher die Handshake-Nachricht sendet, assoziierten Pseudo-Netzwerkknoten angibt.

7. Verfahren nach Anspruch 1,
wobei der besagte erste Netzwerkknoten (NA) dafür konfiguriert ist,
- über die besagte erste Schnittstelle (IF1) lediglich einen ersten Teilsatz des besagten Satzes von Netzwerkprotokollen, und
- über die besagte zweite Schnittstelle (IF12) lediglich einen zweiten Teilsalz des besagten Satzes von Netzwerkprotokollen
zu unterstützen,
und wobei der besagte erste Netzwerkknoten (NA) den besagten anderen Netzwerkknoten (NB, NX1, NX2)
- einen ersten Pseudo-Knoten (PNA1), welcher lediglich Netzwerkprotokolle aus dem besagten ersten Teilsatz unterstützt, und
- einen zweiten Pseudo-Knoten (PNA2), welcher lediglich Netzwerkprotokolle aus dem besagten zweiten Teilsatz unterstützt,
anzeigt.

8. Verfahren nach Anspruch 7,
wobei
- wenn der besagte erste Netzwerkknoten (NA) über *n* Schnittstellen längs *n* Verbindungsabschnitten mit einem anderen Netzwerkknoten (NB) verbunden ist, und wenn der besagte erste Netzwerkknoten (NA) *n* Pseudo-Netzwerkknoten, welche an den besagten jeweiligen *n* Schnittstellen positioniert sind, anzeigt, der besagte erste Netzwerkknoten (NA) die Anzahl seiner angrenzenden Nachbarn in seiner Nachbarliste um *n-1* erhöht;
- wenn der besagte erste Netzwerkknoten (NA) über *n* Schnittstellen längs *n* Verbindungsabschnitten mit einem anderen Netzwerkknoten (NB) verbunden ist, und wenn der besagte erste Netzwerkknoten (NA) *m*<*n* Pseudo-Netzwerkknoten, welche an den besagten jeweiligen *m* Schnittstellen positioniert sind, anzeigt, der besagte erste Netzwerkknoten (NA) die Anzahl seiner angrenzenden Nachbarn in seiner Nachbarliste um *m* erhöht.

9. Netzwerkknoten (NN) zum Austausch von Datenpaketen in einem paketvermittelten Netzwerk,
wobei der besagte Netzwerkknoten (NN) dazu ausgelegt ist, einen Satz von mindestens zwei Netzwerkprotokollen zu unterstützen,
wobei der besagte Netzwerkknoten (NN) dazu ausgelegt ist, sich bei anderen Netzwerkknoten anzuzeigen, indem er den besagten anderen Netzwerkknoten mindestens eine Verbindungszustandsnachricht sendet, welche enthält:
- Eine Netzwerkknotenadresse des besagten Netzwerkknotens (NN),
- eine Nachbartiste, welche die mit dem besagten Netzwerknoten (NN) benachbarte Netzwerkknoten angibt, und
- eine Netzwerkprotokoll-Liste, welche die von dem besagten Netzwerkknoten (NN) unterstützten Netzwerkprotokotfe angibt,
**dadurch gekennzeichnet, dass** der besagte Netzwerkknoten (NN)
- mindestens eine erste und eine zweite Schnittstelle (IF1, IF2) umfasst,
- dafür konfiguriert ist, über die besagte erste (I1) seiner ein oder mehreren Schnittstellen (I1, I1) lediglich einen Teitsatz des besagten Satzes von Netzwerkprotokollen zu unterstützen,
und dass der besagte Netzwerkknoten (NN) dazu ausgelegt ist, den besagten anderen Netzwerkknoten einen Pseudo-Netzwerkknoten, welcher lediglich Netzwerkprotokolle aus dem besagten Teilsatz unterstützt, anzuzeigen,
wobei der besagte Netzwerkknoten (NN) dazu ausgelegt ist, den besagten Pseudo-Netzwerkknoten anzuzeigen, indem er mindestens eine Verbindungszustandsnachricht erzeugt und an die besagten anderen Knoten sendet, welche enthält:
- eine Pseudo-Netzwerkknotenadresse als die Netzwerkknotenadresse,
- eine Nachbarliste, welche den besagten Netzwerkknoten (NN) und einen Netzwerkknoten, welcher über die besagte erste Schnittstelle (I1) erreichbar ist, angibt, und
- eine Netzwerkprotokoll-Liste, welche lediglich Netzwerkprotokolle aus dem besagten Teilsatz angibt,
und der besagte erste Netzwerkknoten (NN) dazu ausgelegt ist, sich bei den besagten anderen Netzwerkknoten anzuzeigen, indem er den besagten anderen Netzwerkknoten mindestens eine Verbindungszustandsnachricht mit einer Nachbarliste (AL_NA) sendet, welche enthält:
- denjenigen Netzwerkknoten (NX1), welcher über die besagte zweite Schnittstelle (IF2) erreichbar ist, und
- den besagten Pseudo-Netzwerkknoten (PNA) anstelle des besagten Netzwerkknotens (NB), welcher über die besagte erste Schnittstelle (IF1) erreichbar ist.

## Revendications

1. Procédé d'échange d'informations de routage entre des noeuds de réseau dans un réseau de commutation de paquets,
dans lequel lesdits noeuds de réseau (NA) s'annoncent eux-mêmes à d'autres noeuds de réseau (NX1, NB, NX2) en envoyant auxdits autres noeuds de réseau des messages d'état de liaison contenant
- une adresse du noeud de réseau du noeud de réseau respectif (NA),
- une liste d'adjacence (AL_NA) indiquant des noeuds de réseau adjacents audit noeud de réseau respectif (NX1, NB), et
- une liste de protocoles de réseau indiquant des protocoles de réseau pris en charge par le noeud de réseau respectif (NA),
**caractérisé en ce qu'**un premier desdits noeuds de réseau (NA)
- comprend au moins une première et une deuxième interfaces (IF1, IF2), dans laquelle un premier autre noeud de réseau (NB) est accessible par l'intermédiaire de ladite première interface (IF1) et dans laquelle un deuxième autre noeud de réseau (NX1) est accessible par l'intermédiaire de ladite deuxième interface,
- prend en charge un ensemble d'au moins deux protocoles de réseau mais est pour prendre en charge par l'intermédiaire de ladite première interface (IF1) parmi sa ou ses interfaces (IF1, IF2) uniquement un sous-ensemble dudit ensemble de protocoles de réseau, annonce auxdits autres noeuds de réseau (NB, NX1, NX2) un pseudo noeud de réseau (PNA), qui prend en charge uniquement les protocoles de réseau dudit sous-ensemble,
dans lequel ledit premier noeud de réseau (NA) annonce ledit pseudo noeud de réseau (PNA) en envoyant auxdits autres noeuds de réseau (NB, NX1, NX2) au moins un message d'état de liaison contenant
- une adresse du pseudo noeud de réseau en tant qu'adresse du noeud de réseau,
- une liste d'adjacence (AL_PNA) indiquant ledit premier noeud de réseau (NA) et ledit premier autre noeud de réseau (NB) qui est accessible par l'intermédiaire de ladite première interface (IF1), et
- une liste de protocoles de réseau indiquant uniquement les protocoles de réseau dudit sous-ensemble,
dans lequel ledit premier noeud de réseau (NA) s'annonce lui-même auxdits autres noeuds de réseau (NB, NX1, NX2), en envoyant auxdits autres noeuds de réseau (NB, NX1, NX2) au moins un message d'état de liaison contenant une liste d'adjacence (AL_NA') qui contient
- ledit deuxième autre noeud de réseau (NX1) accessible par l'intermédiaire de ladite deuxième interface (IF2), et
- ledit pseudo noeud de réseau (PNA) au lieu dudit premier autre noeud de réseau (NB) accessible par l'intermédiaire de ladite première interface (IF1).

2. Procédé selon la revendication 1,
dans lequel lesdits noeuds de réseau génèrent à partir des messages d'état de liaison reçus différentes tables de routage pour les différents protocoles de réseau pris en charge par le noeud de réseau respectif.

3. Procédé selon la revendication 1,
dans lequel ledit premier noeud de réseau (NA) s'annonce lui-même auxdits autres noeuds de réseau (NB, NX1, NX2), en envoyant auxdits autres noeuds de réseau (NB, NX1, NX2) au moins un message d'état de liaison dans lequel une liaison (L11) reliant ledit premier noeud de réseau (NA) et ledit pseudo noeud (PNA) est déclarée.

4. Procédé selon la revendication 1,
dans lequel ledit premier noeud de réseau (NA) annonce ledit pseudo noeud de réseau (PNA) auxdits autres noeuds de réseau (NB, NX1, NX2), en envoyant auxdits autres noeuds de réseau (NB, NX1, NX2) au moins un message d'état de liaison dans lequel une liaison (L12) reliant ledit pseudo noeud de réseau (PNA) et ce noeud de réseau (NB), qui est accessible par l'intermédiaire de ladite interface (IF1), est déclarée.

5. Procédé selon les revendications 1 à 4,
dans lequel ledit premier noeud de réseau (NA) règle ladite adresse du pseudo noeud de réseau en réglant *k* premiers octets de ladite adresse du pseudo noeud de réseau sur *k* premiers octets de ladite adresse du noeud de réseau dudit premier noeud de réseau (NA), et en réglant *j* derniers octets de ladite adresse du pseudo noeud de réseau sur une valeur différente de zéro.

6. Procédé selon les revendications 1 à 5,
dans lequel ledit premier noeud de réseau (NA) échange avec ce noeud (NB), qui est accessible par l'intermédiaire de ladite première interface (IF1), des messages d'établissement de liaison, dans lequel lesdits messages d'établissement de liaison contiennent un identifiant de pseudo noeud respectif indiquant un pseudo noeud de réseau respectif associé au noeud de réseau respectif envoyant le message d'établissement de liaison.

7. Procédé selon la revendication 1,
lequel ledit premier noeud de réseau (NA) est configuré pour prendre en charge
- par l'intermédiaire de ladite première interface (IF1) uniquement un premier sous-ensemble dudit ensemble de protocoles de réseau, et
- par l'intermédiaire d'une deuxième interface (IF12) uniquement un deuxième sous-ensemble dudit ensemble de protocoles de réseau,
et dans lequel ledit premier noeud de réseau (NA) annonce auxdits autres noeuds de réseau (NB, NX1, NX2)
- un premier pseudo noeud (PNA1), qui prend en charge uniquement des protocoles de réseau dudit premier sous-ensemble, et
- un deuxième pseudo noeud (PNA2), qui prend en charge uniquement des protocoles de réseau dudit deuxième sous-ensemble.

8. Procédé selon la revendication 7,
dans lequel
- au cas où ledit premier noeud de réseau (NA) est relié par l'intermédiaire de *n* interfaces le long de *n* liaisons à un autre noeud de réseau (NB), et au cas où ledit premier noeud de réseau (NA) annonce *n* pseudo noeuds de réseau placés au niveau desdites *n* interfaces respectives, ledit premier noeud de réseau (NA) augmente de *n-1* le nombre de ses voisins adjacents dans sa liste d'adjacence.
- au cas où ledit premier noeud de réseau (NA) est relié par l'intermédiaire de *n* interfaces le long de *n* liaisons à un autre noeud de réseau (NB), et au cas où ledit premier noeud de réseau (NA) annonce *m*<*n* pseudo noeuds de réseau placés au niveau desdites *m* interfaces respectives, ledit premier noeud de réseau (NA) augmente de *m* le nombre de ses voisins adjacents dans sa liste d'adjacence.

9. Noeud de réseau (NN) pour échanger des paquets de données dans un réseau de commutation de paquets, dans lequel ledit noeud de réseau (NN) est adapté pour prendre en charge un ensemble d'au moins deux protocoles de réseau,
dans lequel ledit noeud de réseau (NN) est adapté pour s'annoncer lui-même à d'autres noeuds de réseau, en générant et en envoyant auxdits autres noeuds de réseau au moins un message d'état de liaison contenant
- une adresse de noeud de réseau dudit noeud de réseau (NN),
- une liste d'adjacence indiquant des noeuds de réseau adjacents audit noeud de réseau (NN), et
- une liste de protocoles de réseau indiquant des protocoles de réseau pris en charge par ledit noeud de réseau (NN),
**caractérisé en ce que** ledit noeud de réseau (NN)
- comprend au moins une première et une deuxième interfaces (IF1, IF2),
- est configuré pour prendre en charge par l'intermédiaire de ladite première interface (I1) parmi sa ou ses interfaces (I1, I2) uniquement un sous-ensemble dudit ensemble de protocoles de réseau,
et **en ce que** ledit noeud de réseau (NN) est adapté pour annoncer auxdits autres noeuds de réseau un pseudo noeud de réseau, qui prend en charge uniquement les protocoles de réseau dudit sous-ensemble,
dans lequel ledit noeud de réseau (NN) est adapté pour annoncer ledit pseudo noeud de réseau en générant et en envoyant auxdits autres noeuds au moins un message d'état de liaison contenant
- une adresse du pseudo noeud de réseau en tant qu'adresse du noeud de réseau,
- une liste d'adjacence indiquant ledit noeud de réseau (NN) et un noeud de réseau qui est accessible par l'intermédiaire de ladite première interface (I1), et
- une liste de protocoles de réseau indiquant uniquement les protocoles de réseau dudit sous-ensemble,
et dans lequel ledit noeud de réseau (NN) est adapté pour s'annoncer lui-même auxdits autres noeuds de réseau, en envoyant auxdits autres noeuds de réseau au moins un message d'état de liaison contenant une liste d'adjacence (AL_NA'), qui contient
- ce noeud de réseau (NX1) qu est accessible par l'intermédiaire de ladite deuxième interface (IF2), et
- ledit pseudo noeud de réseau (PNA) au lieu dudit noeud de réseau (NB) qui est accessible par l'intermédiaire de ladite première interface (IF1).
